# DEMANDE DE BREVET EUROPEEN

(11) **EP 1 132 330 A1**
(43) Date de publication de la demande: **12.09.2001**
(21) Numéro de dépôt: 01490009.6
(22) Date de dépôt: 07.03.2001
(51) Int. Cl.: B66F 9/18

(54) **Dispositif de chargement de tourets sur rack de deroulage**

(30) Priorité: 08.03.2000 FR 0002978
(71) Demandeur: Dubois, Thierry, 59750 Feignies (FR)
(72) Inventeur: Dubois, Thierry, 59750 Feignies (FR)
(74) Mandataire: Lepage, Jean-Pierre

(57) **Abrégé**

L'invention est relative à un dispositif (1) de chargement de tourets (2) sur rack (3) de déroulage, utilisant un rack (3) à plusieurs niveaux, qui supporte les tourets (2), des coquilles (4) fixées sur le rack et espacées d'une distance "D" sur chacun des niveaux, un axe (6) de touret de longueur "L" dont les deux extrémités s'engagent horizontalement dans une paire de coquilles (4a et 4b), un chariot élévateur (13) destiné à manipuler l'axe (6) de touret.

L'invention, dispose de moyens d'accrochage (16) de l'axe de touret sous les fourches (14) du chariot élévateur (13) permettant de lever l'ensemble axe (6) de touret et touret (2) par le dessous des fourches avec une meilleure visibilité afin de faciliter la manipulation du touret et d'avoir un meilleur positionnement de l'ensemble axe de touret et touret dans la paire de coquilles (4a et 4b..

Application chez tous les fabricants de fils et de câbles électriques pour le transport d'énergie et les télécommunications, de matériels de raccordement et accessoires et de matériels et machines pour la manutention des tourets.

## Description

L'invention est relative à un dispositif de chargement de tourets sur racks de déroulage utilisable dans les parcs de stockage desdits tourets enroulant des fils et câbles de transport d'énergie, de télécommunication et des matériels de raccordement.

Elle trouvera son application chez tous les fabricants et distributeurs de fils et de câbles électriques, isolés ou non, pour le transport d'énergie et les télécommunications et chez les fabricants de matériels de raccordement et accessoires. Elle trouvera également son application chez les fabricants de matériel et de machines pour la manutention des tourets.

Lors de la manutention, du stockage, du chargement et du déchargement de tourets, des précautions de manipulation sont nécessaires pour ne pas endommager le fil ou câble enroulé et gêner son utilisation ultérieure. En effet, le poids des tourets peut varier entre 200 kilogrammes et 5 tonnes et nécessite par conséquent l'utilisation de chariots élévateurs manuels ou motorisés pour faciliter la manipulation desdits tourets.

Le stockage dynamique des tourets s'effectue sur des racks, généralement sur cinq à six niveaux pouvant atteindre une hauteur de 8 mètres. Pour cela, un axe de touret est positionné dans un trou central sur le touret, puis l'ensemble s'engage par les deux extrémités de l'axe de touret dans des coquilles se trouvant sur le rack à différents niveaux. Les tourets sont généralement rangés du plus gros au plus petit de bas en haut sur le rack.

On entend par stockage dynamique des tourets le fait que les tourets sont stockés sur les racks pour ensuite être déroulés pour tirer le fil ou câble pour son utilisation.

Un premier moyen de manipulation des tourets pour les positionner sur le rack consiste à les placer sur des fourches d'un chariot élévateur. Dans ce cas, le touret est porté verticalement par le chariot élévateur puis amené en position sur le rack de façon à engager les deux extrémités de l'axe de touret dans les coquilles. Pour cela, l'opérateur se trouve dans la cabine du chariot élévateur et doit apprécier la trajectoire et la position de l'axe de touret par rapport aux coquilles du rack pour effectuer le chargement.

Les coquilles sont de taille adaptée au diamètre de l'axe lui-même fonction du diamètre du trou central du touret et il est donc difficile de les visualiser avec grande précision, surtout lorsqu'elles sont placées à plusieurs mètres de hauteur.

Cette opération reste assez facile lorsqu'il s'agit de positionner le touret sur les deux premiers niveaux du rack, cependant elle devient difficile et dangereuse sur les niveaux supérieurs. En effet, l'opérateur a une vision directe sur l'axe de touret et sur les coquilles du rack lorsqu'il s'agit de charger les tourets sur les deux premiers niveaux. Tandis que sur les niveaux supérieurs, la visibilité de l'opérateur est réduite à cause du tablier et des fourches du chariot élévateur qui masquent la vue de l'opérateur sur l'axe des tourets et sur les coquilles du rack, et celui-ci éprouve par conséquent des difficultés à positionner convenablement les éléments.

Pour cela il est possible que les tourets soient mal positionnés au moment d'engager l'axe dans les coquilles, ce qui entraîne leur chute sur le sol créant alors des dégâts importants sur le sol ou les machines et pouvant blesser l'opérateur.

De même, les joues du touret sont positionnées directement sur les fourches sans être fixées ou solidarisées avec celles-ci pendant le chargement et le déplacement de l'élévateur, si bien que lorsque l'opérateur manipule trop rapidement le chariot en position haute, le touret peut bouger sur les fourches et basculer du chariot.

Un autre dispositif permet d'améliorer sensiblement la visibilité du touret lorsqu'il est en position haute sur le chariot. Celui-ci consiste à utiliser des fourreaux fixés sur le dessus des fourches à leur extrémité. Ces fourreaux reçoivent l'axe de touret et le portent pour le positionner dans les coquilles du rack. La position du touret à l'extrémité des fourches facilite certes la vision de celui-ci en altitude, cependant l'axe du touret, qui s'engage avec les coquilles du rack, reste caché par les fourches du chariot au cours de l'opération de chargement qui de ce fait, reste difficile.

Un autre inconvénient de ce système est que les fourreaux sont fixes sur les fourches. Pour cela, l'axe de touret en position immobile dans les fourreaux doit être bien positionné parallèlement aux coquilles du rack afin que les deux extrémités de l'axe s'engagent en même temps dans les coquilles ce qui évite tout effort de forçage sur les fourches et sur le rack. En effet, lorsque l'axe de touret n'est pas parallèle aux coquilles, l'opérateur doit alors forcer sur les fourches ou sur le rack pour les positionner parallèlement avant de les engager l'un dans l'autre, ce qui risque de déformer les fourches ou le rack et de sortir l'axe de touret des fourreaux entraînant ainsi la chute du touret.

La position du touret à l'extrémité des fourches a pour inconvénient de créer un couple sur le chariot qui tend à basculer vers l'avant du fait de l'éloignement de la charge du centre de gravité du chariot de levage. Pour cela, le dispositif de chargement nécessite d'utiliser des chariots de capacité de charge utile plus forte ayant un contrepoids lourd, ce qui augmente le prix de la machine. La taille du chariot a aussi pour conséquence d'influer sur les largeurs des allées de circulation dans les magasins et ateliers de coupe.

La présente invention vise à remédier à ces inconvénients, et l'un des buts principaux est de faciliter le positionnement de l'axe de touret dans les coquilles du rack et ainsi engager convenablement les deux éléments, sans risque de chute du touret.

Pour cela, la présente invention a pour avantage d'améliorer la visibilité de l'opérateur lors de la mise en place du touret sur le rack en positionnant l'axe de touret sous les fourches du chariot élévateur. De cette façon, l'opérateur voit directement, sans aucun obstacle, l'axe de touret lorsqu'il le positionne dans les coquilles du rack et sait quand il peut retirer les fourches sans risque de faire tomber le touret.

Un autre but de la présente invention est de supprimer tout forçage sur les fourches du chariot et sur le rack lors de la mise en position de l'axe de touret dans les coquilles et ainsi éviter que ces éléments ne se déforment.

Pour cela, l'invention a pour avantage de rattraper les défauts de positionnement, de parallélisme entre l'axe de touret et l'axe des coquilles du rack, qui ainsi évite de forcer sur les fourches ou sur la structure du rack afin de placer les axes parallèlement et de pouvoir engager le touret sur le rack. Ainsi, on prolonge la qualité et la durée de vie du matériel utilisé.

Un autre avantage de la présente invention est de réduire les efforts de couple sur le chariot élévateur, ce qui permet d'utiliser des machines plus petites, avec un contrepoids moins important, et ainsi de réduire les coûts du système de chargement en utilisant des chariots élévateurs moins chers et nécessitant moins d'espace de circulation pour le chargement et le déchargement du rack..

D'autres buts et avantages de la présente invention apparaîtront au cours de la description suivante qui n'a pas pour but de la limiter.

La présente invention est relative à un dispositif de chargement de tourets sur rack de déroulage utilisable dans les parcs de stockage desdits tourets enroulant des fils et câbles de transport d'énergie, de télécommunication et des matériels de raccordement, utilisant :
- un rack à plusieurs niveaux, qui supporte les tourets,
- des coquilles fixées sur le rack et espacées d'une distance "D" sur chacun des niveaux,
- un axe de touret de longueur "L" et d'un diamètre qui est adapté au diamètre d'un trou central sur le touret pour s'insérer dans celui-ci, les deux extrémités de touret étant engagées horizontalement dans une paire de coquilles,
- un chariot élévateur muni de fourches espacées d'une largeur "1" et destinées à manipuler l'axe de touret pour l'engager dans la paire de coquilles sur le rack,
caractérisé par le fait qu'il dispose de moyens d'accrochage de l'axe de touret sous les fourches du chariot élévateur permettant de lever l'ensemble axe de touret et touret par le dessous des fourches avec une meilleure visibilité afin de faciliter la manipulation du touret et d'avoir un meilleur positionnement de l'ensemble axe de touret et touret dans la paire de coquilles sur le rack de déroulage.

L'invention sera mieux comprise à la lecture de la description suivante qui s'appuie sur des dessins à savoir :
- la figure 1 qui présente le dispositif de chargement dans son ensemble,
- la figure 2 qui présente des moyens d'accrochage par le dessous des fourches, en vue de face et en vue de côté,
- la figure 3 qui présente le touret en position sur le rack,
- la figure 4 qui présente différentes étapes au cours du positionnement de l'axe de touret dans les coquilles du rack.

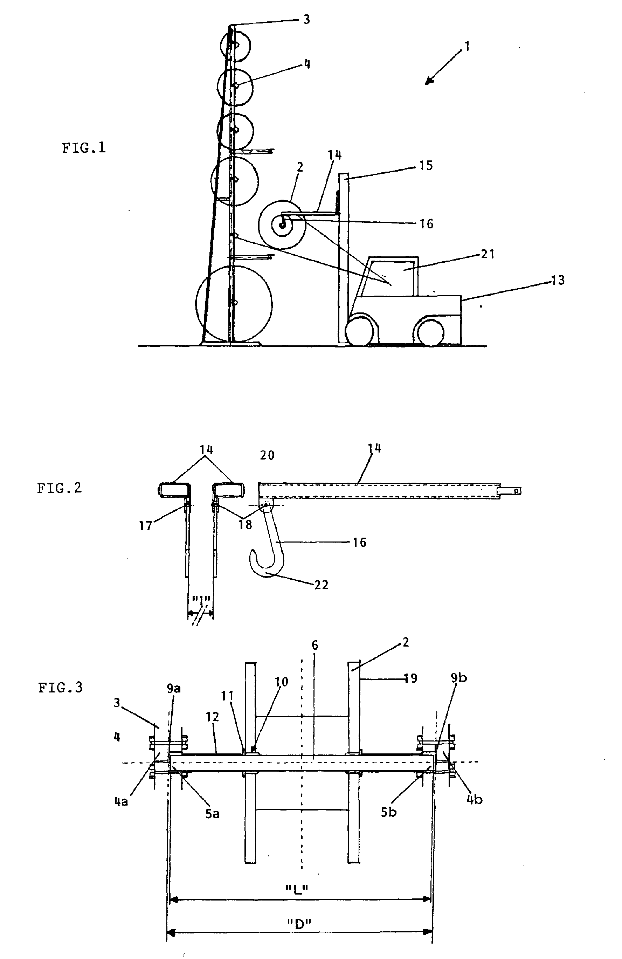

La figure 1 présente le dispositif (1) de chargement de tourets (2) sur rack (3) de déroulage. Les tourets (2) stockés sur le rack (3) peuvent avoir un poids et un diamètre différent selon le type et la longueur des fils ou câbles qui sont enroulés sur celui-ci. Pour cela, le poids des tourets peut varier de quelques centaines de kilogrammes à plusieurs tonnes, généralement de 200 kg à 5 tonnes. Les tourets (2) sont donc placés sur plusieurs niveaux sur le rack (3) du plus gros au plus petit et de bas en haut.

Les tourets sont placés dans un mode préférentiel sur cinq niveaux sur le rack, qui peut atteindre par conséquent une hauteur de 8 mètres. Pour cela, le rack dispose de coquilles (4) positionnées à un emplacement correspondant à chacun des niveaux sur le rack. Ces coquilles sont donc alignées horizontalement sur chacun des niveaux du rack et sur toute sa longueur.

Sur chacun des niveaux, une paire de coquilles (4a et 4b) est destinée à recevoir les deux extrémités (Sa et 5b) d'un axe de touret (6), comme le montre la figure 3, ce qui permet de stocker les tourets sur le rack. Dans un mode préférentiel, chaque coquille (4) est capable de recevoir une extrémité de deux axes (6) de touret, une extrémité (5b) d'un premier axe sur la partie gauche (7) de la coquille et une extrémité (5a) d'un second axe sur la partie droite (8) de la même coquille.

Les deux parties (7 et 8) sont séparées par une butée verticale (9). Ainsi les deux butées verticales (9a et 9b) d'une paire de coquilles (4a et 4b) définissent un espacement d'une distance "D" dans lequel vient se loger l'axe (6) de touret et le touret (2), comme présenté à la figure 3.

L'axe de touret doit avoir une longueur "L" légèrement inférieure à la distance "D" de façon à passer entre les butées verticales (9a et 9b). De même, l'axe de touret doit avoir un diamètre adapté au trou central (10) qui se trouve sur le touret et dans lequel il s'engage.

Dans un mode préférentiel mais non limitatif, des bagues (11) de rotation et des bagues (12) de centrage sont utilisées pour le montage de l'axe de touret (6) sur le touret (2) afin de respecter les normes de sécurité. Le montage de ces bagues (11) de rotation et (12) de centrage est représenté à la figure 3 et consiste à positionner les bagues (11) de rotation sur le trou central (10) du touret de chaque côté des jantes (19) du touret, puis à insérer l'axe de touret à l'intérieur des bagues de rotation et à positionner enfin les bagues (12) de centrage.

La manipulation des tourets (2) pour les positionner sur le rack s'effectue au moyen d'un chariot élévateur (13) motorisé ou manuel, capable de supporter les charges des tourets selon le niveau auquel il faut les stocker. Le chariot élévateur (13) est équipé de deux fourches (14) destinées à manipuler l'axe de touret (6) pour le placer et l'engager dans la paire de coquilles (4a et 4b) sur le rack. Pour cela, les fourches doivent s'élever sur le tablier (15) du chariot jusque une hauteur minimale de 8 mètres correspondant à la hauteur du rack.

Ainsi, le chariot est de dimensions adaptées à la hauteur du rack à atteindre et dispose, par exemple, d'un tablier (15) duplex ou triplex d'une hauteur de l'ordre de 4 mètres qui se déploie jusqu'à une hauteur de 8 mètres.

Les fourches sont espacées d'une largeur "I" qui doit être supérieure à la largeur du touret et inférieure à la longueur "L" de l'axe (6) afin de pouvoir passer le touret entre les fourches et saisir l'axe de touret par ses extrémités (5a et 5b). Pour cela, l'écartement des fourches du chariot élévateur est généralement réglable afin d'être adapté à la largeur des tourets utilisés et peut se déplacer latéralement grâce à un système commandable depuis le poste de conduite.

Le dispositif de chargement (1) utilise des moyens d'accrochage (16) de l'axe de touret sous les fourches (14) du chariot élévateur. Ces moyens d'accrochage sous les fourches permettent de lever l'axe de touret et le touret par le dessous des fourches en ayant une bonne visibilité des extrémités (5a et 5b) de l'axe de touret au cours de l'opération de chargement du touret sur le rack.

En effet, l'opérateur voit directement la position de l'axe de touret (6) par rapport aux coquilles (4) et manipule donc plus facilement le chariot élévateur pour engager les éléments, axe de touret et coquilles, ensemble. Ainsi on obtient un meilleur positionnement du touret sur le rack et on s'assure que l'axe du touret s'engage convenablement dans la paire de coquilles, ce qui évite les chutes de touret.

Les moyens d'accrochage de l'axe de touret sous les fourches du chariot élévateur sont constitués, dans un mode préférentiel mais non limitatif, par deux crochets (16) mobiles sur les deux fourches (14). Cette mobilité réalisée entre les crochets et les fourches est, par exemple, obtenue au moyen d'une liaison de type pivot dans un axe perpendiculaire aux fourches qui permet d'articuler les crochets dans le sens longitudinal des fourches.

L'articulation des crochets, dans un mode préférentiel, permet d'éviter tout forçage sur les fourches du chariot et sur le rack, en particulier lorsque l'opérateur avance trop fortement le chariot sur le rack.

Les crochets (16) sont articulés indépendamment l'un de l'autre, ce qui permet de rattraper les défauts de parallélisme lorsque l'opérateur ne positionne pas son chariot élévateur bien perpendiculairement au rack. Ainsi, l'opérateur est capable de positionner les deux extrémités de l'axe de touret parallèles à la paire de coquilles même si le chariot est mal positionné, grâce aux deux crochets qui pivotent indépendamment sur les fourches jusqu'à atteindre le résultat souhaité. Cela s'effectuant en évitant le forçage sur les fourches et sur le rack.

Pour cela, chaque crochet a sa propre liaison pivot (17 et 18) sur chacune des fourches (14), comme présenté à la figure 2, les rendant indépendant l'un de l'autre. Ainsi, lorsque l'axe de touret (6) a une seule de ses extrémités (5a) ou (5b) en butée sur le rack, positionnée au-dessus d'une des coquilles (4a) ou (4b), le crochet (16) se trouvant du côté de cette extrémité pivote alors sans forçage jusqu'à ce que la seconde extrémité (Sa) ou (5b) de l'axe (6) soit bien placée au-dessus de la seconde coquille (4a) ou (4b) et ainsi pouvoir engager l'axe (6) dans les coquilles (4a et 4b) sans défaut de positionnement.

L'articulation des crochets s'effectue dans un mode préférentiel à l'extrémité (20) des fourches, comme présenté à la figure 2), afin de permettre une meilleure visibilité de l'axe de touret vu depuis l'intérieur de la cabine (21) du chariot élévateur.

La position des articulations de crochet à l'extrémité des fourches tend cependant à créer un bras de levier sur le chariot élévateur lorsque le touret est levé sur les niveaux supérieurs, ce qui risque de faire basculer le chariot élévateur vers l'avant. Pour cela, les machines utilisent donc un contrepoids permettant de maintenir l'équilibre.

Afin de réduire ce bras de levier sur le chariot, les crochets ont, dans un mode préférentiel, une longueur de plusieurs centaines de millimètres, par exemple 300 mm, ce qui permet d'abaisser le centre de gravité du touret et ainsi réduire le couple sur la machine. Les machines peuvent donc utiliser un contrepoids moins important pour compenser le bras de levier, ce qui réduit le coût de ces machines.

Les crochets sont conçus dans un mode préférentiel en acier et ont des dimensions permettant d'avoir une résistance capable de supporter des charges de touret de plusieurs tonnes. En effet, la section du crochet devra être calculée afin d'éviter que l'extrémité recourbée (22) du crochet (16) se plie sous la charge du touret, ce qui risquerait de faire tomber le touret sur le sol.

L'extrémité recourbée (22) du crochet a, dans un mode préférentiel, des dimensions supérieures au diamètre de l'axe de touret (6) afin de s'assurer que l'axe (6) soit bien enveloppé par le crochet et ainsi éviter qu'il ne sorte de l'extrémité recourbée (22) lors de secousses du chariot élévateur en cours de manipulation, ce qui risquerait de faire chuter le touret sur le sol.

On choisit par exemple un diamètre de la partie recourbée (22) du crochet de 90 millimètres qui est supérieur au diamètre de l'axe de touret (6) qui lui est de l'ordre de 80 millimètres.

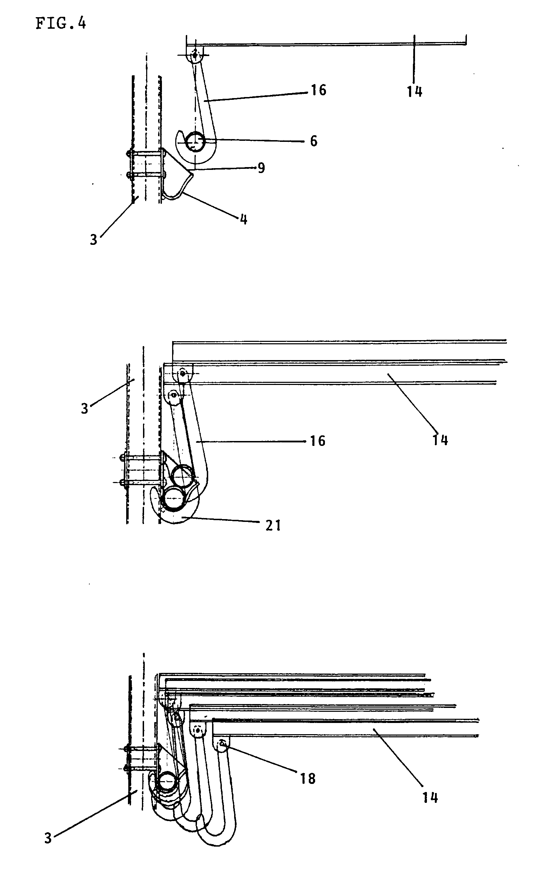

L'opération de chargement consiste dans un premier temps à amener le chariot élévateur de façon à positionner les fourches de chaque côté des jantes (19) du touret et d'avoir les parties recourbées (22) des deux crochets (16) sous l'axe de tourét (6). Ensuite, comme le montre la figure 4, l'opérateur engage les crochets (16) dans l'axe de touret (6) et lève le touret jusqu'à le positionner devant les coquilles (4a et 4b) de façon à ce que les éléments soient sensiblement parallèles. Puis comme représenté à la figure 4, l'opérateur engage les extrémités (5a et 5b) de l'axe de touret (6) dans les coquilles (4a et 4b) en ayant une vue directement sur les éléments. Enfin, l'opérateur descend lentement les fourches pour désengager les crochets (16) de l'axe de touret et évacuer ensuite le chariot élévateur, une fois qu'il s'est assuré visuellement que les éléments sont effectivement séparés.

Ainsi, le dispositif de chargement de la présente invention permet d'améliorer la visibilité des éléments en cours d'opération de chargement des tourets sur le rack, ce qui évite les chutes de tourets sur le sol et renforce donc la sécurité du travail effectué. De même, il permet de rattraper les défauts de positionnement au moment d'engager l'axe de touret sur les coquilles du rack et évite ainsi tout forçage sur les fourches ou sur le rack au moment où l'opérateur engage les éléments l'un dans l'autre et évacue le chariot élévateur du rack une fois l'opération effectuée.

## Revendications

1. Dispositif (1) de chargement de tourets (2) sur rack (3) de déroulage utilisable dans les parcs de stockage desdits tourets enroulant des fils et câbles de transport d'énergie, de télécommunication et des matériels de raccordement, utilisant :
- un rack (3) à plusieurs niveaux, qui supporte les tourets (2),
- des coquilles (4) fixées sur le rack et espacées d'une distance "D" sur chacun des niveaux,
- un axe (6) de touret de longueur "L" et d'un diamètre qui est adapté au diamètre d'un trou central (10) sur le touret pour s'insérer dans celui-ci, les deux extrémités de touret étant engagées horizontalement dans une paire de coquilles (4a et 4b),
- un chariot élévateur (13) muni de deux fourches espacées (14) d'une largeur "1" et destinées à manipuler l'axe (6) de touret pour l'engager dans la paire de coquilles (4a et 4b) sur le rack (3),
caractérisé par le fait qu'il dispose de moyens d'accrochage (16) de l'axe de touret sous les fourches (14) du chariot élévateur (13) permettant de lever l'ensemble axe (6) de touret et touret (2) par le dessous des fourches avec une meilleure visibilité afin de faciliter la manipulation du touret et d'avoir un meilleur positionnement de l'ensemble axe de touret et touret dans la paire de coquilles (4a et 4b) sur le rack (3) de déroulage.

2. Dispositif de chargement de tourets (2) sur rack (3) de déroulage utilisable dans les parcs de stockage desdits tourets, selon la revendication 1, caractérisé par le fait que les moyens d'accrochage de l'axe (6) de touret sous les fourches (14) du chariot élévateur (13) sont constitués par des crochets (16) mobiles sur les fourches.

3. Dispositif de chargement de tourets (2) sur rack (3) de déroulage utilisable dans les parcs de stockage desdits tourets, selon les revendications 1 et 2, caractérisé par le fait que les crochets (16) sont articulés sur les fourches (14) pour éviter tout forçage sur le chariot élévateur (13) et sur la structure du rack (3).

4. Dispositif de chargement de tourets (2) sur rack (3) de déroulage utilisable dans les parcs de stockage desdits tourets, selon les revendications 1 à 3, caractérisé par le fait que les crochets (16) sont indépendants l'un de l'autre pour permettre de rattraper les défauts de parallélisme et de positionnement.

5. Dispositif de chargement de tourets (2) sur rack (3) de déroulage utilisable dans les parcs de stockage desdits tourets, selon les revendications 1 et 2, caractérisé par le fait que les crochets (16) ont une grande longueur qui permet de réduire les efforts sur les chariots élévateurs (13).

6. Dispositif de chargement de tourets (2) sur rack (3) de déroulage utilisable dans les parcs de stockage desdits tourets, selon les revendications 1 et 2, caractérisé par le fait que l'extrémité recourbée (22) du crochet (16) doit avoir un diamètre supérieur au diamètre des axes (6) de touret.

7. Dispositif de chargement de tourets (2) sur rack (3) de déroulage utilisable dans les parcs de stockage desdits tourets, selon les revendications 1 et 2, caractérisé par le fait que le crochet (16) est en acier et a des dimensions permettant de résister à la charge des tourets (2).
